# EUROPÄISCHE PATENTSCHRIFT

(11) **EP 3 028 108 B1**
(45) Veröffentlichungstag und Bekanntmachung des Hinweises auf die Patenterteilung: **11.09.2019**
(21) Anmeldenummer: 14739046.2
(22) Anmeldetag: 10.07.2014
(51) Int. Cl.: G05D 19/02, F16F 15/00, B06B 1/02

(54) **VERFAHREN ZUM STEUERN, INSBESONDERE DÄMPFEN, EINER MECHANISCHEN SCHWINGUNG EINES SYSTEMS**
METHOD FOR CONTROLLING, IN PARTICULAR DAMPING, A MECHANICAL OSCILLATION OF A SYSTEM
PROCÉDÉ PERMETTANT DE MAÎTRISER, EN PARTICULIER D'AMORTIR, UNE OSCILLATION MÉCANIQUE D'UN SYSTÈME

(30) Priorität: 01.08.2013 DE 102013012716
(43) Veröffentlichungstag der Anmeldung: 08.06.2016
(73) Patentinhaber: SEW-EURODRIVE GmbH & Co. KG, 76646 Bruchsal (DE)
(72) Erfinder: STEINSDÖRFER, Andreas, 76676 Graben-Neudorf (DE); ZÖLLER, Thomas, 76646 Bruchsal (DE)
(86) Internationale Anmeldenummer: PCT/EP2014/001901
(87) Internationale Veröffentlichungsnummer: WO 2015/014444

(56) Entgegenhaltungen:
- GB-A- 2 483 337
- US-A- 4 353 015
- US-A1- 2006 220 599

## Beschreibung

Die Erfindung betrifft ein Verfahren zum Steuern, insbesondere Dämpfen, einer mechanischen Schwingung eines Systems.

Es ist allgemein bekannt, dass beim Vibrationsschweißen Reibungswärme erzeugt wird, die zu einer Erhitzung der zu verschweißenden Körperabschnitte einsetzbar ist.

**Aus der** GB 2 483 337 A **ist als nächstliegender Stand der Technik ein Verfahren zum aktiven Dämpfen eines akustischen Transducers bekannt.**

**Aus der** US 2006/0220599 A1 **ist eine Antriebseinheit für Steuerung reziproker Elektromagneten bekannt.**

Der Erfindung liegt daher die Aufgabe zugrunde, ein Verfahren zum Steuern, insbesondere Dämpfen, einer mechanischen Schwingung eines Systems weiterzubilden, wobei ein möglichst dynamisches Steuern der Schwingung ausführbar sein soll.

Erfindungsgemäß wird die Aufgabe bei dem Verfahren zum Steuern, insbesondere Dämpfen, einer mechanischen Schwingung eines Systems nach den in Anspruch 1 angegebenen Merkmalen gelöst.

Wichtige Merkmale der Erfindung bei dem Verfahren sind, dass das Verfahren zum Steuern, insbesondere Dämpfen, einer mechanischen Schwingung eines Systems, insbesondere zum Vibrationsschweißen, vorgesehen ist,
**wobei** in einem ersten Zeitabschnitt das System mit einem Erregersignal, das einen ersten Frequenzwert f1 aufweist, angeregt wird, so dass ein erster zeitlicher Verlauf p(t) der Phase des Erregersignals vorhanden ist,
in einem zweiten Zeitabschnitt das System mit einem zeitlich veränderlichen Frequenzwerteverlauf f(t) angeregt wird, der derart gewählt ist, dass am Ende des zweiten Zeitabschnitts der zeitliche Verlauf der Phase des Erregersignals eine nicht verschwindende Phasendifferenz Delta_p zum ersten zeitlichen Verlauf p(t) der Phase aufweist,
wobei der Frequenzwerteverlauf f(t) zu Beginn des zweiten Zeitabschnittes mit dem ersten Frequenzwert f1 beginnt und zum Ende des zweiten Zeitabschnitts mit dem ersten Frequenzwert f1 endet,
insbesondere wobei der Frequenzwerteverlauf f(t) stetig ist, insbesondere stetig und stetig differenzierbar ist..

Von Vorteil ist dabei, dass mittels der Frequenzänderung eine Phasenverschiebung erzeugbar ist, die trotz im Wesentlichen rein induktiver Last sehr dynamisch erzeugbar ist. Somit ist das Erregersignal von einem spannungsgeführten Frequenzumrichter bewirkbar, indem dieser einen oder mehrere Elektromagnete speist. Trotz einer solchen im Wesentlichen rein induktiven Last ist ein schnelles Anregen und Abregen, also Dämpfen, der mechanischen Schwingung erreichbar. Bei der mechanischen Schwingung wird potentielle Energie im Magnetfeld in kinematische Energie umgewandelt und umgekehrt, wobei zusätzlich Reibung bewirkt wird

Bei einer vorteilhaften Ausgestaltung folgt der zweite Zeitabschnitt direkt auf den ersten Zeitabschnitt. Von Vorteil ist dabei, dass der im ersten Zeitabschnitt als Frequenzwert des Erregersignals angewendete Frequenzwert f1 der Anfangsfrequenzwert für den zweiten Zeitabschnitt ist. Der Frequenzverlauf des zweiten Zeitabschnitts startet also mit diesem Wert. Durch die Veränderung der Frequenz im zweiten Zeitabschnitt ist eine Phasendifferenz erzeugbar, die relativ zum Phasenverlauf des ersten Zeitabschnitts besteht. Zum Bestimmen der Phasendifferenz muss dabei der Phasenverlauf des ersten Zeitabschnitts extrapoliert werden auf den Zeitpunkt des Vergleichs, also beispielsweise das Ende des zweiten Zeitabschnitts. Dort besteht dann die Phasendifferenz vom Phasenverlauf zur Phase des Erregersignals.

Bei einer vorteilhaften Ausgestaltung wird im ersten Zeitabschnitt die Amplitude des Erregersignals derart gesteuert, dass die Amplitude der mechanischen Schwingung , welche mittels eines Sensors erfasst wird, auf ihren Sollwert hin geregelt wird. Von Vorteil ist dabei, dass ein vorgebbarer Sollwert an Amplitude einregelbar ist. Somit ist die mechanische Schwingung anregbar und mit der vorgegebenen Amplitude betreibbar. Ein entsprechender dissipativer Leistungsstrom ist somit ebenfalls bewirkbar, wobei dieser dissipative Leistungsstrom als Wärme nutzbar ist zum Vibrationsschweißen.

Bei einer vorteilhaften Ausgestaltung wird im zweiten Zeitabschnitt die Amplitude des Erregersignals konstant gehalten. Von Vorteil ist dabei, dass die Phasendifferenz ungestört erzeugbar ist und gleichzeitig schon die mechanische Schwingung entsprechend stark dämpfbar ist.

Bei einer vorteilhaften Ausgestaltung entspricht die Phasendifferenz Delta_p dem bestimmten Integral des Integranden 2 ^{∗} π^{∗} f(t), wenn dieser integriert wird über den zweiten Zeitabschnitt. Von Vorteil ist dabei, dass die Phasendifferenz einfach bestimmbar ist.

Bei einer vorteilhaften Ausgestaltung ist das Erregersignal ein Wechselmagnetfeld,
insbesondere wobei das Wechselmagnetfeld mittels eines oder mehrerer Elektromagneten erzeugt wird, der oder die jeweils mit einer elektrischen Spannung gespeist sind, insbesondere die von einem Transformator sekundärseitig zur Verfügung gestellt wird, der primärseitig von einem Umrichter gespeist ist,
insbesondere wobei der Umrichter einen netzgespeisten Gleichrichter umfasst, aus dessen gleichgerichteter Ausgangsspannung ein Wechselrichter des Umrichters gespeist wird, der eine Drehspannung zur Verfügung stellt, insbesondere mit welcher der Transformator gespeist wird,
wobei die Amplitude und Frequenz der Drehspannung steuerbar sind,
insbesondere wobei der Transformator ein Scott-Transformator ist, dessen sekundärseitige Wechselspannungen eine Phasenverschiebung von 90° aufweisen. Von Vorteil ist dabei, dass ein dreiphasiger Wechselrichter zur Speisung verwendbar ist, obwohl nur einphasige Versorgungen erforderlich sind. Außerdem ist von Vorteil, dass als Umrichter ein industrieller Antriebsumrichter einsetzbar ist, also ein Umrichter, der in anderer Verwendung einen Elektromotor speist, welcher ein Getriebe antreibt.

Bei einer vorteilhaften Ausgestaltung hat die Phasendifferenz Delta_p einen Wert zwischen 160° und 200° hat, insbesondere 180°. Von Vorteil ist dabei, dass eine schnelle Dämpfung der Schwingung erreichbar ist.

Bei einer vorteilhaften Ausgestaltung wird in einem dritten Zeitabschnitt, welcher direkt folgt auf den zweiten Zeitabschnitt, der Frequenzwert f1 konstant gehalten, wobei die Amplitude derart gesteuert wird, dass ein vorgebbarer Sollwert erreichbar ist, insbesondere Null. Von Vorteil ist dabei, dass ein weiteres Abdämpfen ermöglicht ist, wobei die Amplitude der mechanischen Schwingung auf Null regelbar ist.

Bei einer vorteilhaften Ausgestaltung wird ein derartiger Frequenzwerteverlauf f(t) ausgeführt, dass der Frequenzwert im zweiten Zeitabschnitt auf ein Minimum abgesenkt wird und danach wieder erhöht wird,
insbesondere wobei das Absenken monoton erfolgt und das Erhöhen ebenfalls monoton erfolgt. Von Vorteil ist dabei, dass durch die Frequenzveränderung eine gewünschte Phasendifferenz erzeugbar ist.

Bei einer vorteilhaften Ausgestaltung beträgt das Minimum Null. Von Vorteil ist dabei, dass die mechanische Schwingung abdämpfbar und beendbar ist.
in dem zweiten Zeitabschnitt die Amplitude des Erregersignals derart gesteuert wird, dass die Amplitude der mechanischen Schwingung auf einen vorgebbaren Sollwert hin regelbar ist, insbesondere auf den Sollwert Null, also verschwindende Amplitude. Von Vorteil ist dabei, dass gleichzeitig mit dem Aufbau der dämpfenden Phasendifferenz die mechanische Schwingung abdämpfbar ist bis zum Verschwinden. Ein weiteres Anregen mit dem Erregersignal ist somit verhinderbar. Die Sicherheit hierbei ist erhöht.

Die Erfindung wird nun anhand von Abbildungen näher erläutert:

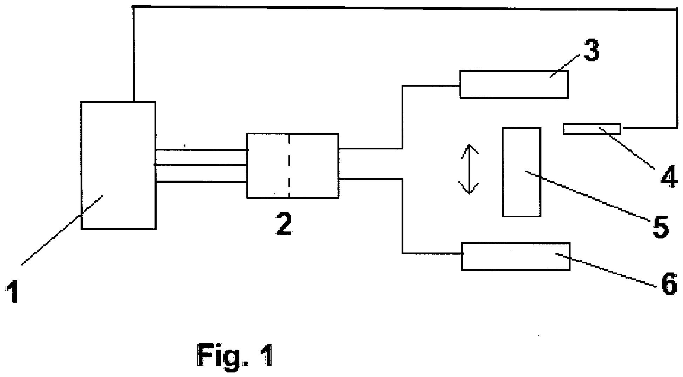

In der Figur 1 ist ein schematischer Aufbau eines erfindungsgemäßen Systems einer Anlage gezeigt.

Dabei speist eine Drehspannungsquelle 1, insbesondere ein netzgespeister Umrichter, einen Transformator 2, insbesondere Scott-Transformator.

Hierzu wird dem Umrichter eine Netzwechselspannung zugeführt, gleichgerichtet und auf diese Weise ein Wechselrichter des Umrichters mit Gleichspannung gespeist. Der Wechselrichter weist drei Halbbrücken aus pulsweitenmoduliert angesteuerten Leistungshalbleiterschaltern auf, so dass der Umrichter ausgangsseitig eine frequenzvariable Drehspannungsquelle darstellt.

Von dieser Drehspannungsquelle wird ein Transformator, insbesondere Scott-Transformator, gespeist, der zwei Sekundärwicklungen aufweist, deren induzierte Spannungsverläufe im Wesentlichen um 90° versetzt zueinander sind. Primärseitig weist der Transformator also einen dreiphasigen Anschluss auf. Sekundärseitig weist der Transformator Anschlüsse für zwei Sekundärwicklungen auf.

Aus der ersten Sekundärwicklung wird ein erster Elektromagnet 3 versorgt und aus der zweiten Sekundärwicklung ein zweiter Elektromagnet 6. Zwischen den beiden Elektromagneten (3, 6) ist ein Schwingkörper 5 angeordnet, so dass dieser den beiden von den Elektromagneten (3, 6) erzeugten Magnetfeldern ausgesetzt ist und somit eine lineare Hin- und Herbewegung mit der vom Umrichter ausgangsseitig zur Verfügung gestellten Frequenz ausführt, da die von den beiden Elektromagneten (3, 6) erzeugten Magnetfelder zueinander eine Phasenverschiebung aufweisen. Der Schwingkörper 5 weist vorzugsweise ferromagnetisches Material auf, wie beispielsweise Eisen oder ferromagnetischer Stahl.

Ein Sensor 4 ist derart angeordnet, dass mittels ihm die Amplitude und/oder Frequenz der Hin- und Herbewegung des Schwingkörpers 5 detektierbar ist.

Der Schwingkörper 5 ist beispielhaft in einem Kunststoffabschnitt angeordnet, welches auf einen anderen Kunststoffabschnitt gedrückt wird und gleichzeitig hin- und herbewegt wird, insbesondere tangential zur Oberfläche des Kunststoffabschnitts, so dass Reibungswärme erzeugt wird, die im Kontaktbereich den Kunststoff erweicht oder sogar zumindest in Mikrobereichen verflüssigt. Nach einem entsprechend gewählten Zeitabschnitt, in welchem für das Erweichen ausreichend Wärmeenergie eingebracht wurde, wird das den Schwingkörper 5 anregende Magnetfeld gegenphasig gemacht, um die Hin- und Herbewegung abzubremsen. Auf diese Weise ist ein Vibrationsschweißen ermöglicht.

Bei einem weiteren erfindungsgemäßen Ausführungsbeispiel wird ein derartiger Soll-Frequenzverlauf für das Magnetfeld oder den entsprechenden Ausgangsstrom der steuerbaren Drehspannungsquelle 1, also beispielsweise des Umrichters, hinterlegt und erzeugt, dass die Frequenz in einem ersten Zeitabschnitt konstant und in einem darauf zweiten, nachfolgenden Zeitabschnitt monoton abnehmend vorgegeben ist.

Wie in Figur 1 gezeigt, wird im ersten Zeitabschnitt also von der Drehspannungsquelle 1 eine periodische Ausgangsspannung ausgangsseitig erzeugt. Diese ist darstellbar durch U(t) und weist die Periodendauer T auf, so dass gilt U(t) = U(t-T). Diese Frequenz f1 =1/T wird möglichst nahe an eine Resonanzfrequenz, insbesondere zuvor bestimmte Resonanzfrequenz, des Systems mit Schwingkörper gelegt. Auf diese Weise wird eine Amplitude der mechanischen Hin- und Herbewegung, also Schwingung, des Schwingkörpers 5 erzeugt. Somit werden auch entsprechende Verlustleistungen, beispielsweise als Reibungswärmestrom, erzeugbar. Die Phasenlage der mechanischen Schwingung ist im Resonanzpunkt 90° zur Erregerfrequenz phasenverschoben

Mit dem Sensor 4 ist die Amplitude der mechanischen Schwingung des Schwingkörpers 5 bestimmbar. Die Amplitude der von der Drehspannungsquelle gelieferten Spannung wird von einem Regler derart gestellt, dass die bestimmte Amplitude der Schwingung auf einen vorgebbaren Sollwert hin geregelt wird. Somit ist eine entsprechend große Amplitude erreichbar.

Nach Einregeln des Sollwertes stellt sich ein zeitlicher Verlauf p(t) der Phase der Ausgangsspannung U(t) ein. Nach einer vorgegebenen Zeitdauer oder nach Detektieren einer genügend hohen Temperatur und/oder eines genügend hohen Verlustenergiestroms ist der erste Zeitabschnitt beendet und der zweite Zeitabschnitt beginnt, wobei ein konstanter Amplitudenwert beibehaltbar ist. Hierbei wird die Frequenz reduziert bis zu einem minimalen Frequenzwert oder sogar zu Null. Dieses Reduzieren erfolgt mit einer ersten, sehr großen Änderungsgeschwindigkeit v1. Das nachfolgende Erhöhen des Frequenzwerts erfolgt mit einer zweiten, betragsmäßig kleineren Änderungsgeschwindigkeit v2. Sobald der Frequenzwert f wieder erreicht ist, ist allerdings im Vergleich zum zeitlich in den zweiten Zeitabschnitt extrapolierten Verlauf p(t) der Phase des periodischen Spannungsverlauf U(t) des ersten Zeitabschnitts eine Phasenverschiebung von im Wesentlichen 180° aufgebaut.

Die zugehörige Phasenverschiebung ist als zeitliches Integral von 2 ^{∗} π^{∗} f(t) bestimmbar, wobei das Integral als bestimmtes Integral auszuführen ist von Beginn des zweiten Zeitabschnitts bis zum Ende des zweiten Zeitabschnitts..

Nach dem zweiten Zeitabschnitt ist auch noch die Frequenz konstant haltbar während eines dritten Zeitabschnitts. Dabei ist die Amplitude derart steuerbar, dass der vorgebbare Sollwert erreichbar ist, insbesondere Null.

Der Schwingkörper 5 ist in dem Kunststoffteil vorgesehen, das elastisch auslenkbar ist. Somit wird als Erregersignal das von den Elektromagneten erzeugte inhomogene Wechselmagnetfeld mit zeitabhängig räumlich veränderlichen Feldstärkequellen verwendet. Denn wegen der 90° Phasenverschiebung der Spannungsversorgung der beiden Elektromagnete ziehen die beiden Elektromagnete zeitlich abwechselnd den Schwingkörper 5 zu sich hin. Somit entsteht durch die zeitabhängig räumlich veränderliche Feldquelle eine Hin- und Herbewegung des Spulenkörpers 5, also eine mechanische Schwingung, deren Erregung mittels des Wechselmagnetfelds bewirkt wird. Das Wechselmagnetfeld bewirkt die Erregung und kann daher als Erregersignal bezeichnet werden. Andererseits bewirkt die vom Umrichter erzeugte Wechselspannung mittels der Elektromagneten die Erregung und kann daher auch als Erregersignal bezeichnet werden.

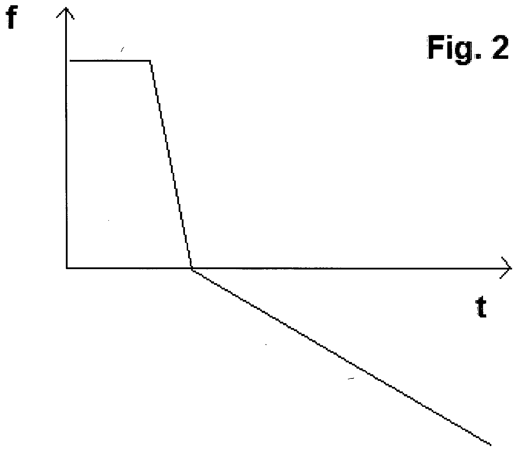

In Figur 2 ist ein beispielhafter nur qualitativ zu verstehender Verlauf der Funktion f(t) gezeigt. Dabei verläuft die Funktion f(t) stetig.

Durch die entsprechende Veränderungsgeschwindigkeiten (v1 und v2) der Frequenz im zweiten Zeitabschnitt ist also eine entsprechende Phasenänderungen bewirkbar.

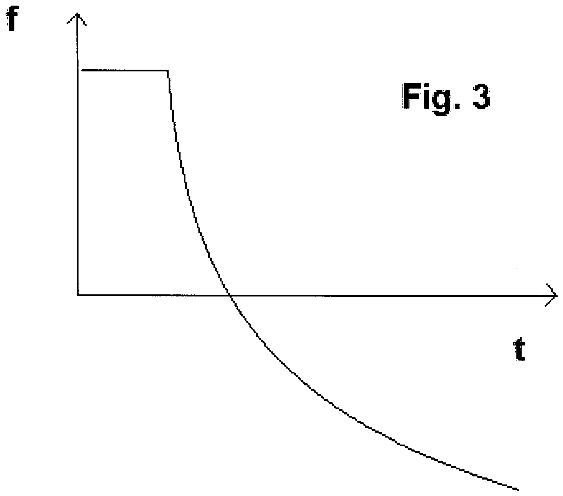

Bei einem weiteren erfindungsgemäßen Ausführungsbeispiel wird eine nichtlineare Funktion f(t), wie beispielhaft in Figur 3 ebenfalls nur qualitativ gezeigt, verwendet. Dabei verläuft die Funktion f(t) im zweiten Zeitabschnitt nicht nur stetig sondern sogar stetig differenzierbar, also glatt. Bei einem weiteren erfindungsgemäßen Ausführungsbeispiel wird der Beginn der Funktion f(t) derart modifiziert, dass er ebenfalls stetig oder sogar stetig differenzierbar ist und somit auch der gesamte Verlauf in allen Zeitabschnitten.

### Bezugszeichenliste

- 1: Drehspannungsquelle, insbesondere netzgespeister Umrichter
- 2: Transformator, insbesondere Scott-Transformator
- 3: erster Elektromagnet
- 4: Sensor
- 5: Schwingkörper
- 6: Elektromagnet

## Patentansprüche

1. Verfahren zum Steuern, insbesondere Dämpfen, einer mechanischen Schwingung eines Systems, insbesondere zum Vibrationsschweißen,
**wobei** in einem ersten Zeitabschnitt das System mit einem Erregersignal, das einen ersten Frequenzwert f1 aufweist, angeregt wird, so dass ein erster zeitlicher Verlauf p(t) der Phase des Erregersignals vorhanden ist,
in einem zweiten Zeitabschnitt das System mit einem zeitlich veränderlichen Frequenzwerteverlauf f(t) angeregt wird, der derart gewählt ist, dass am Ende des zweiten Zeitabschnitts der zeitliche Verlauf der Phase des Erregersignals eine nicht verschwindende Phasendifferenz Delta_p zum ersten zeitlichen Verlauf p(t) der Phase aufweist,
wobei der Frequenzwerteverlauf f(t) zu Beginn des zweiten Zeitabschnittes mit dem ersten Frequenzwert f1 beginnt und zum Ende des zweiten Zeitabschnitts mit dem ersten Frequenzwert f1 endet,
insbesondere wobei der Frequenzwerteverlauf f(t) stetig ist, insbesondere stetig und stetig differenzierbar ist,
**dadurch gekennzeichnet, dass**
**im ersten Zeitabschnitt die Amplitude des Erregersignals derart gesteuert wird, dass die Amplitude der mechanischen Schwingung, welche mittels eines Sensors (4) erfasst wird, auf ihren Sollwert hin geregelt wird,**
**wobei das Erregersignal ein Wechselmagnetfeld ist,**
**wobei das Wechselmagnetfeld mittels eines oder mehrerer Elektromagneten (3, 6) erzeugt wird, der oder die jeweils mit einer elektrischen Spannung gespeist sind, die von einem Transformator (2) sekundärseitig zur Verfügung gestellt wird, der primärseitig von einem Umrichter (1) gespeist ist,**
**wobei der Umrichter (1) einen netzgespeisten Gleichrichter umfasst, aus dessen gleichgerichteter Ausgangsspannung ein Wechselrichter des Umrichters (1) gespeist wird, der eine Drehspannung zur Verfügung stellt, mit welcher der Transformator (2) gespeist wird,**
**wobei die Amplitude und Frequenz der Drehspannung steuerbar sind,**
**wobei der Transformator (2) ein Scott-Transformator (2) ist, dessen sekundärseitige Wechselspannungen eine Phasenverschiebung von 90° aufweisen.**

2. Verfahren nach Anspruch 1,
**dadurch gekennzeichnet, dass**
der zweite Zeitabschnitt direkt auf den ersten Zeitabschnitt folgt

3. Verfahren nach mindestens einem der vorangegangenen Ansprüche,
**dadurch gekennzeichnet, dass**
im zweiten Zeitabschnitt die Amplitude des Erregersignals konstant gehalten wird.

4. Verfahren nach mindestens einem der vorangegangenen Ansprüche,
**dadurch gekennzeichnet, dass**
**die Phasendifferenz Delta_p dem bestimmten Integral des Integranden 2** ^{∗} **π^{∗} f(t) entspricht, wenn dieser integriert wird über den zweiten Zeitabschnitt.**

5. Verfahren nach mindestens einem der vorangegangenen Ansprüche,
**dadurch gekennzeichnet, dass**
die Phasendifferenz Delta_p einen Wert zwischen 160° und 200° hat, insbesondere 180°.

6. Verfahren nach mindestens einem der vorangegangenen Ansprüche,
**dadurch gekennzeichnet, dass**
in einem dritten Zeitabschnitt, welcher direkt folgt auf den zweiten Zeitabschnitt, der Frequenzwert f1 konstant gehalten wird, wobei die Amplitude derart gesteuert wird, dass ein vorgebbarer Sollwert erreichbar ist, insbesondere Null,

7. Verfahren nach mindestens einem der vorangegangenen Ansprüche,
**dadurch gekennzeichnet, dass**
in einem dritten Zeitabschnitt, welcher direkt folgt auf den zweiten Zeitabschnitt, die Amplitude des Erregersignals derart gesteuert wird, dass die Amplitude der mechanischen Schwingung auf einen vorgebbaren Sollwert hin regelbar ist, insbesondere auf den Sollwert Null, also verschwindende Amplitude.

8. Verfahren nach mindestens einem der vorangegangenen Ansprüche,
**dadurch gekennzeichnet, dass**
der Frequenzwerteverlauf f(t) im zweiten Zeitabschnitt auf ein Minimum abgesenkt wird und danach wieder erhöht wird,
insbesondere wobei das Absenken monoton erfolgt und das Erhöhen ebenfalls monoton erfolgt.

9. Verfahren nach mindestens einem der vorangegangenen Ansprüche,
**dadurch gekennzeichnet, dass**
das Minimum Null beträgt.

10. Verfahren nach mindestens einem der vorangegangenen Ansprüche,
**dadurch gekennzeichnet, dass**
**in dem zweiten Zeitabschnitt die Amplitude des Erregersignals derart gesteuert wird, dass die Amplitude der mechanischen Schwingung auf einen vorgebbaren Sollwert hin regelbar ist, insbesondere auf den Sollwert Null, also verschwindende Amplitude.**

## Claims

1. Method for controlling, in particular damping, a mechanical vibration of a system, in particular for vibration welding,
wherein, in a first time period, the system is excited by an exciter signal having a first frequency f1, such as to produce a first time curve p(t) of the phase of the exciter signal,
in a second time period, the system is excited by a frequency value curve f(t) that changes over time and is selected such that at the end of the second time period the time curve of the phase of the exciter signal has a non-negligible phase difference Delta_p from the first curve p(t) of the phase,
wherein the frequency value curve f(t) begins at the first frequency value f1 at the start of the second time period and ends at the first frequency f1 at the end of the second time period,
in particular wherein the frequency value curve f(t) is continuous, in particular continuous and continuously differentiable,
**characterised in that**
in the first time period, the amplitude of the exciter signal is controlled such that the amplitude of the mechanical vibration detected by means of a sensor (4) is controlled towards its setpoint,
wherein the exciter signal is an alternating magnetic field,
wherein the alternating magnetic field is generated by means of one or more electromagnets (3, 6), each fed by an electrical voltage provided by a transformer (2) at the secondary side, said transformer being fed by a converter (1) at the primary side,
wherein the converter (1) comprises a main-powered rectifier, the rectified output voltage of which feeds an inverter of the converter (1), said inverter providing a three-phase voltage by which the transformer (2) is fed,
wherein the amplitude and frequency of the three-phase voltage can be controlled,
wherein the transformer (2) is a Scott transformer (2), the secondary-side AC voltages of which have a 90° phase shift.

2. Method according to claim 1,
**characterised in that**
the second time period directly follows the first time period.

3. Method according to at least one of the preceding claims,
**characterised in that**
the amplitude of the exciter signal is kept constant in the second time period.

4. Method according to at least one of the preceding claims,
**characterised in that**
the phase difference Delta_p corresponds to the determined integral of the integrand 2 ^{∗} π ^{∗} f(t) when said integrand is integrated over the second time period.

5. Method according to at least one of the preceding claims,
**characterised in that**
the phase difference Delta_p has a value between 160° and 200°, in particular of 180°.

6. Method according to at least one of the preceding claims,
**characterised in that**
in a third time period, which directly follows the second time period, the frequency value f1 is kept constant, wherein the amplitude is controlled such that a predefinable setpoint, in particular zero, can be achieved.

7. Method according to at least one of the preceding claims,
**characterised in that**
in a third time period, which directly follows the second time period, the amplitude of the exciter signal is controlled such that the amplitude of the mechanical vibration can be controlled towards a predefinable setpoint, in particular to the setpoint zero, i.e. a vanishing amplitude.

8. Method according to at least one of the preceding claims,
**characterised in that**
in the second time period, the frequency value curve f(t) is reduced to a minimum and then increased again,
in particular wherein the frequency is reduced monotonically and is also increased monotonically.

9. Method according to at least one of the preceding claims,
**characterised in that**
the minimum is zero.

10. Method according to at least one of the preceding claims,
**characterised in that**
in the second time period, the amplitude of the exciter signal is controlled such that the amplitude of the mechanical vibration can be controlled towards a predefinable setpoint, in particular to the setpoint zero, i.e. a vanishing amplitude.

## Revendications

1. Procédé de commande, en particulier d'amortissement, d'une oscillation mécanique d'un système, en particulier pour le soudage par vibration,
dans lequel, dans une première tranche de temps, le système est excité par un signal d'excitation qui présente une première valeur de fréquence f1, de sorte qu'un premier tracé temporel p(t) de la phase du signal d'excitation est présent,
dans une deuxième tranche de temps, le système est excité par un tracé de valeur de fréquence f(t) variable dans le temps qui est choisi de telle sorte qu'à la fin de la deuxième tranche de temps, le tracé temporel de la phase du signal d'excitation présente une différence de phase Delta_p non évanouissante par rapport au premier tracé temporel p(t) de la phase,
dans lequel le tracé de valeur de fréquence f(t) commence au début de la deuxième tranche de temps par la première valeur de fréquence f1 et se termine à la fin de la deuxième tranche de temps par la première valeur de fréquence f1,
en particulier dans lequel le tracé de valeur de fréquence f(t) est continu, en particulier continu et différentiable de manière continue,
**caractérisé en ce que**
dans la première tranche de temps, l'amplitude du signal d'excitation est commandée de telle sorte que l'amplitude de l'oscillation mécanique qui est détectée au moyen d'un capteur (4) soit réglée à sa valeur de consigne,
dans lequel le signal d'excitation est un champ magnétique alternatif,
dans lequel le champ magnétique alternatif est généré au moyen d'un ou plusieurs électro-aimants (3, 6) qui sont alimentés chacun par une tension électrique qui est fournie du côté secondaire par un transformateur (2) qui est alimenté du côté primaire par un convertisseur (1),
dans lequel le convertisseur (1) comprend un redresseur alimenté par le réseau, dont la tension de sortie redressée alimente un onduleur du convertisseur (1), lequel fournit une tension triphasée avec laquelle le transformateur (2) est alimenté,
dans lequel l'amplitude et la fréquence de la tension triphasée sont commandables,
dans lequel le transformateur (2) est un transformateur de Scott (2) dont les tensions alternatives du côté secondaire présentent un déphasage de 90°.

2. Procédé selon la revendication 1,
**caractérisé en ce que**
la deuxième tranche de temps suit directement la première tranche de temps.

3. Procédé selon au moins l'une des revendications précédentes,
**caractérisé en ce que**
l'amplitude du signal d'excitation est maintenue constante dans la deuxième tranche de temps.

4. Procédé selon au moins l'une des revendications précédentes,
**caractérisé en ce que**
la différence de phase Delta_p correspond à l'intégrale déterminée de l'intégrande 2 ^{∗} π ^{∗} f(t) lorsque celui-ci est intégré sur la deuxième tranche de temps.

5. Procédé selon au moins l'une des revendications précédentes,
**caractérisé en ce que**
la différence de phase Delta_p a une valeur comprise entre 160° et 200°, en particulier de 180°.

6. Procédé selon au moins l'une des revendications précédentes,
**caractérisé en ce que**,
dans une troisième tranche de temps qui suit directement la deuxième tranche de temps, la valeur de fréquence f1 est maintenue constante, l'amplitude étant commandée de telle sorte qu'une valeur de consigne prédéfinissable, en particulier de zéro, puisse être atteinte.

7. Procédé selon au moins l'une des revendications précédentes,
**caractérisé en ce que**,
dans une troisième tranche de temps qui suit directement la deuxième tranche de temps, l'amplitude du signal d'excitation est commandée de telle sorte que l'amplitude de l'oscillation mécanique puisse être réglée à une valeur de consigne prédéfinissable, en particulier à la valeur de consigne de zéro, c'est-à-dire une amplitude évanouissante.

8. Procédé selon au moins l'une des revendications précédentes,
**caractérisé en ce que**
le tracé de valeur de fréquence f(t) est abaissé à un minimum dans la deuxième tranche de temps et ensuite de nouveau augmenté,
en particulier l'abaissement ayant lieu de façon monotone et l'augmentation ayant lieu également de façon monotone.

9. Procédé selon au moins l'une des revendications précédentes,
**caractérisé en ce que**
le minimum est de zéro.

10. Procédé selon au moins l'une des revendications précédentes,
**caractérisé en ce que**,
dans la deuxième tranche de temps, l'amplitude du signal d'excitation est commandée de telle sorte que l'amplitude de l'oscillation mécanique puisse être réglée à une valeur de consigne prédéfinissable, en particulier à la valeur de consigne de zéro, c'est-à-dire une amplitude évanouissante.
